## Europäisches Patentamt

## European Patent Office

## Office européen des brevets

(19)

(11) Veröffentlichungsnummer: **0 180 701**

**B1**

(12) **EUROPÄISCHE PATENTSCHRIFT**

(45) Veröffentlichungstag der Patentschrift:
12.10.88

(21) Anmeldenummer: 85103908.1

(22) Anmeldetag: 01.04.85

(51) Int. Cl.⁴: **A 23 N 12/02,** A 01 D 33/04,
A 01 D 33/08, B 03 B 5/56

(54) Verfahren und Vorrichtung zum Trennen von Fremdkörpern, wie Steine, Kies und Sand, von Hackfrüchten, insbesondere Zuckerrüben.

(30) Priorität: 30.10.84 DK 5170/84

(43) Veröffentlichungstag der Anmeldung:
14.05.86 Patentblatt 86/20

(45) Bekanntmachung des Hinweises auf die Patenterteilung:
12.10.88 Patentblatt 88/41

(84) Benannte Vertragsstaaten:
BE DE FR GB IT NL

(56) Entgegenhaltungen:
DE-A-2 840 416
DE-U-8 114 504
US-A-1 603 944

(73) Patentinhaber: SN- ENGINEERING A/S,
Industriparken 6, DK- 4800 Nyköbing F (DK)

(72) Erfinder: Hansen, Kaj, Oestrigsvej 34, DK- 4800
Nyköbing F (DK)

(74) Vertreter: Patentanwälte Beetz sen. - Beetz jun.
Timpe - Siegfried - Schmitt- Fumian,
Steinsdorfstrasse 10, D-8000 München 22 (DE)

LIBER, STOCKHOLM 1988

## Beschreibung

Die Erfindung betrifft ein Verfahren zum Trennen von Fremdkörpern, wie Steine, Kies und Sand, von Hackfrüchten, insbesondere Zuckerrüben, in einem Flüssigkeitsstrom, der im Oberbegriff des Patentanspruchs 1 angegebenen Gattung sowie eine Vorrichtung zur Durchführung dieses Verfahrens gemäß dem Oberbegriff des Patentanspruchs 2.

Aus dem DE-U-8 114 504.7 ist eine derartige Vorrichtung mit Hubrädern und einer Waschtrommel bekannt, bei der Rüben und Steine in einem horizontalen Wasserstrom transportiert werden, wobei die Strömungsgeschwindigkeit innerhalb der Vorrichtung durch Erweiterung des Strömungsquerschnittes derart verringert wird, daß Steine, Kies und Sand in der Trommel zu Boden sinken, während die Rüben im Strom schweben. Die auf den Trommelboden gesunkenen Steine und anderen Fremdkörper werden in Taschen der Hubräder gesammelt, angehoben und in obere Schurren ausgetragen. Die Vorrichtung weist je ein Hubrad am Eintragsende und am Austragsende der drehangetriebenen perforierten Waschtrommel auf. Jedes Hubrad ist fest mit der Waschtrommel verbunden. Dadurch wird mit nur einer Vorrichtung eine sehr hohe Abscheidekapazität erreicht. Wenn jedoch sehr große Mengen von Steinen und anderen Fremdkörpern im Strom von den Rüben abgeschieden werden müssen, können die Taschen des vorderen Hubrades überfüllt werden. Diese Überfüllung kann den hydrostatischen Druck nachteilig vermindern, der in Umfangskanälen des Hubrades bei seiner Drehbewegung am Auslaufende aufgebaut wird und eine der Sinkbewegung der Steine entgegengerichtete Vertikalströmung erzeugt. Die überschüssigen Steine werden mittels eines Schneckengangs an der Innenseite der Waschtrommel in das austragsseitige Hubrad transportiert, in dem sie gesammelt und ausgetragen werden.

Wenn bedingt durch die Böden in den Zuckeranbaugebieten normalerweise geringere Anteile von Steinen und anderen Fremdkörpern in den Rüben enthalten sind und die Steineanteile nur chargenweise krass ansteigen, müssen eine oder mehrere dieser Vorrichtungen in Reserve gehalten werden, um den notwendigen Trenneffekt auch bei übermäßig großen Fremdkörpermengen sicherzustellen. Um den dadurch bedingten hohen Aufwand an Platz, Investitionskosten und Wartung zu vermindern, besteht ein Bedarf an einfacheren Steineabscheidern, die ggfs. bei Spitzenbelastungen zugeschaltet werden.

Aus der DE-A-2 840 416 ist ein Steineabscheider von relativ geringerer Trennleistung bekannt, bei dem nur an der Einlauföffnung einer Siebtrommel ein Hubrad befestigt ist, das Flüssigkeitskanäle und Sammeltaschen enthält. An der Innenseite der Siebtrommel ist ein gegen die Strömung verlaufender Schraubengang angeordnet, in dem die in der Siebtrommel zu Boden gesunkenen Steine u.a.m. zum eintragsseitigen Hubrad zurückgeführt werden. Aufgrund der relativ hohen Strömungsgeschwindigkeit in der Zulaufrinne werden jedoch erfahrungsgemäß zu viele Steine am Hubrad vorübergeführt. Leichtere Steine, z. B. Ziegelbruch, werden erst am hinteren Ende der Trommel zu Boden sinken und müssen über die gesamte Trommellänge durch deren Rotation zurückgefördert werden, was hohe kostspielige Antriebsleistungen erfordert. Ferner werden die Steine während dieses Rücktransports mit den schwebenden Rüben zusammenstoßen, was zum Abbrechen der zarten Rübenspitzen führen kann, die einen hohen Zuckergehalt haben. Schließlich wird ein nicht unerheblicher Teil der leichteren Steine nicht zu Boden sinken, sondern in die Transportrinne mitgerissen und erst in den Schnitzelmaschinen aufgefangen werden.

Aufgabe der Erfindung ist es, ein Verfahren und eine Vorrichtung zum Trennen von Steinen, Kies und Sand von Hackfrüchten in einem Flüssigkeitsstrom anzugeben, das bei hohem Abscheidegrad und verringerter Antriebsleistung eine schonendere Behandlung der Hackfrüchte gewährleistet.

Diese Aufgabe wird erfindungsgemäß dadurch gelöst, daß die Hackfrüchte und die Fremdkörper im Strom durch den erweiterten Strömungsquerschnitt mitgeführt und erst am Ende des erweiterten Strömungsquerschnitts gesammelt und ausgetragen werden.

Dadurch wird auf einfache Weise eine größere Sicherheit für das Ausscheiden aller Fremdkörper erreicht, weil selbst relativ leichte Fremdkörper lange bevor sie an das austragsseitige Hubrad gelangt sind, sich am Boden gesammelt haben. Durch eine passende Dimensionierung der Querschnittserweiterung und der Länge des erweiterten Strömungsabschnitts können die abgesunkenen Steine auch in einem einfachen Becherelevator gesammelt und ausgetragen werden, weil die Hackfrüchte mehr an der Oberfläche des erweiterten Abschnitts über den Sammeltaschen schwimmen werden. Es ist jedoch natürlich auch möglich, von einem hydrostatischen Druck in den Taschen Gebrauch zu machen, so daß gezielt nur Fremdkörper mit einem beträchtlich größeren spezifischen Gewicht als dem der Rüben in die Taschen fallen.

Die Vorrichtung zur Durchführung des Verfahrens enthält einen gegenüber der Einlaufrinne erweiterten Trog, in dem eine Waschtrommel und ein Hubrad rotiert, welches Umfangskanäle enthält, die durch die Rotation des Hubrads Transportwasser von seiner Außenseite zu Sammeltaschen für die Steine an der Innenseite des Rads leiten. Die Vorrichtung ist dadurch gekennzeichnet, daß die Waschtrommel in Strömungsrichtung vor dem Hubrad angebracht ist.

Mit dieser Vorrichtung wird auf einfachste Weise der Trenneffekt wesentlich verbessert und zwar auch von Fremdkörpern, die nur wenig schwerer als die Zuckerrüben sind, weil durch geeignete Dimensionierung des Durchmessers und der Länge der Trommel sowie durch eine Regulierung des hydrostatischen Drucks von der aufgesammelten Flüssigkeitsmenge in den Kanälen und an ihren Auslaßöffnungen ein Beruhigungsgrad der Steine erreicht werden kann, der für ihr Absinken gerade notwendig ist, wobei jedoch die Hackfrüchte durch die aufwärtsgerichtete Strömung des hydrostatischen Drucks während ihrer Passage über die Taschen in der Schwebe gehalten werden.

Bei einer bevorzugten Ausführungsform mit einer Siebtrommeleinheit, die Öffnungen für die Passage von abgesunkenen kleinen Fremdkörpern, wie Kies und Sand, enthält und die an ihrer Außenseite eine schraubenlinienförmige Finne aufweist, die das durch die Öffnungen getretene Material bis zum austragsseitigen Hubrad in Strömungsrichtung an der Außenseite der Trommel transportiert, kann die Innenfläche der Trommel vorteilhaft glatt sein. Dies ergibt eine weitere Vereinfachung durch Weglassen des inneren Schraubenganges. Es hat sich nämlich herausgestellt, daß die durch die Friktion zwischen den Steinen und der Trommel erzeugte vorwärtsgerichtete Komponente zusammen mit der Wirkung des Flüssigkeitsstroms genügen, um die Steine durch die Trommel zu transportieren. Im ersten Trommelabschnitt bewegen sich die Steine etwa auf einer parabelförmigen Bahn und rollen im letzten Abschnitt an der Innenseite der Trommel.

Bei einer zweckmäßigen Ausführung der erfindungsgemäßen Vorrichtung sind vor den Taschen des Hubrads Schieber zum Regulieren des Kanalquerschnittes am Auslaufende vorgesehen. Diese Schieber können bei Überschreiten von Grenzbelastungen von der Oberseite der Taschen ausbiegen oder ausschwenken. Dadurch wird eine einfache Regulierungsmöglichkeit erreicht, so daß im Betrieb der vom hydrostatischen Druck erzeugte Auftrieb den augenblicklichen Betriebsverhältnissen, d.h. der Menge von Steinen und deren spezifischem Gewicht, angepaßt werden kann. Durch Einrichtung der Schieber in einer solchen Weise, daß sie Belastungen von der Oberseite der Taschen über eine gewisse Größe nachgeben, wird gleichzeitig eine Möglichkeit für das Aufsammeln sehr schwerer Steine erreicht, indem diese durch die Schieber und in die Taschen fallen werden.

Bei einer in der Praxis bevorzugten Ausführung sind die Schieber plattenförmige Körper aus armiertem Gummi, die um eine fiktive Linie am Hinterrand der Taschen biegen oder schwenken können. Bei dieser zuverlässigen und billigen Lösung hat das armierte Gummimaterial die notwendige Steifheit zum Absperren des Flüssigkeitsstroms in Aufwärtsrichtung, gleichzeitig ist es genügend nachgiebig, um verhältnismäßig schwere Steine durchzulassen, ohne daß der Korrosion ausgesetzte Gelenke oder ähnliches notwendig sind.

Eine eigentümliche, insbesondere hinsichtlich des Trenneffekts besondere, Ausgestaltung der Erfindung zeichnet sich dadurch aus, daß die Wasch- bzw. Siebtrommel eine sich zum Hubrad hin erweiternde Form hat, wodurch sich ein allmählich zunehmender Strömungsquerschnitt ergibt und die Absinkgeschwindigkeit der Fremdkörper entsprechend beeinflußt werden kann.

Ein bevorzugtes Ausführungsbeispiel der Erfindung wird nachstehend anhand der Zeichnung näher erläutert. Es zeigen:

Fig. 1: schematisch einen Längsschnitt von oben durch eine erfindungsgemäße Vorrichtung,

Fig. 2: schematisch einen Schnitt II-II.

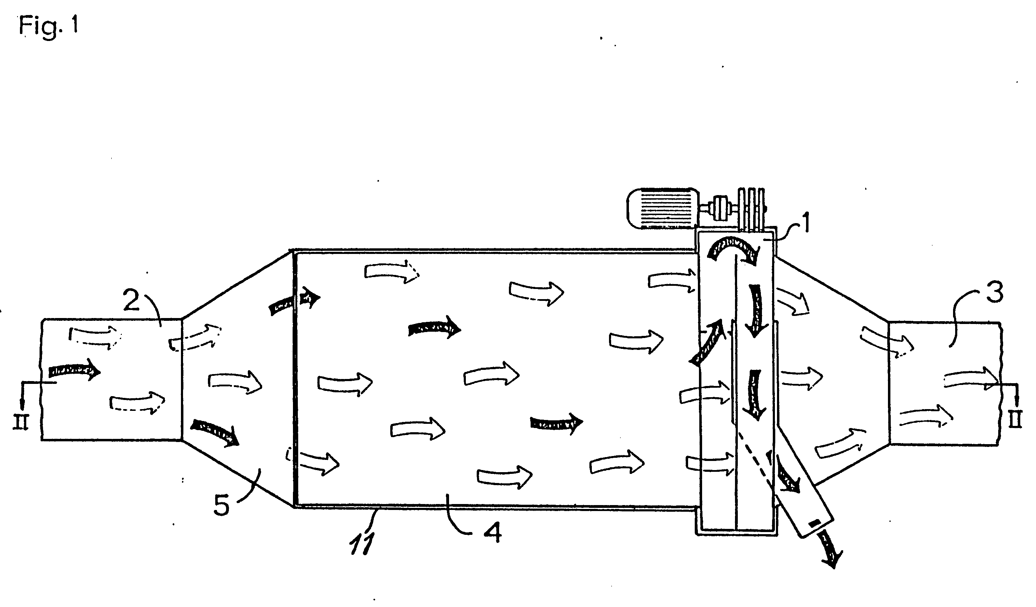

Fig. 1 der Zeichnung zeigt schematisch von oben die Bewegungen in der erfindungsgemäßen Vorrichtung. Die Rüben und die Fremdkörper werden in Richtung der Pfeile in einer Hochrinne 2, 3 transportiert, in die eine Siebtrommel 4 mit einem an ihrem austragsseitigen Ende befestigten Hubrad 1 eingeschaltet ist. Das Hubrad 1 ist als Sammel- und Entleerungsrad ausgebildet und zum Rotieren zusammen mit der Trommel eingerichtet. Unmittelbar vor dem Einlaufende der Siebtrommel 4 wird der Strömungsquerschnitt in der Hochrinne 2 im Abschnitt 5 kontinuierlich erweitert und stromab des Hubrades 1 verengt sich die Hochrinne 3 wieder. Ein Antriebsmotor greift mittels mehrerer Reib- oder Zahnräder am Außenumfang des Hubrades 1 an und treibt das Hubrad zusammen mit der Siebtrommel an. Dies hat antriebstechnische Vorzüge.

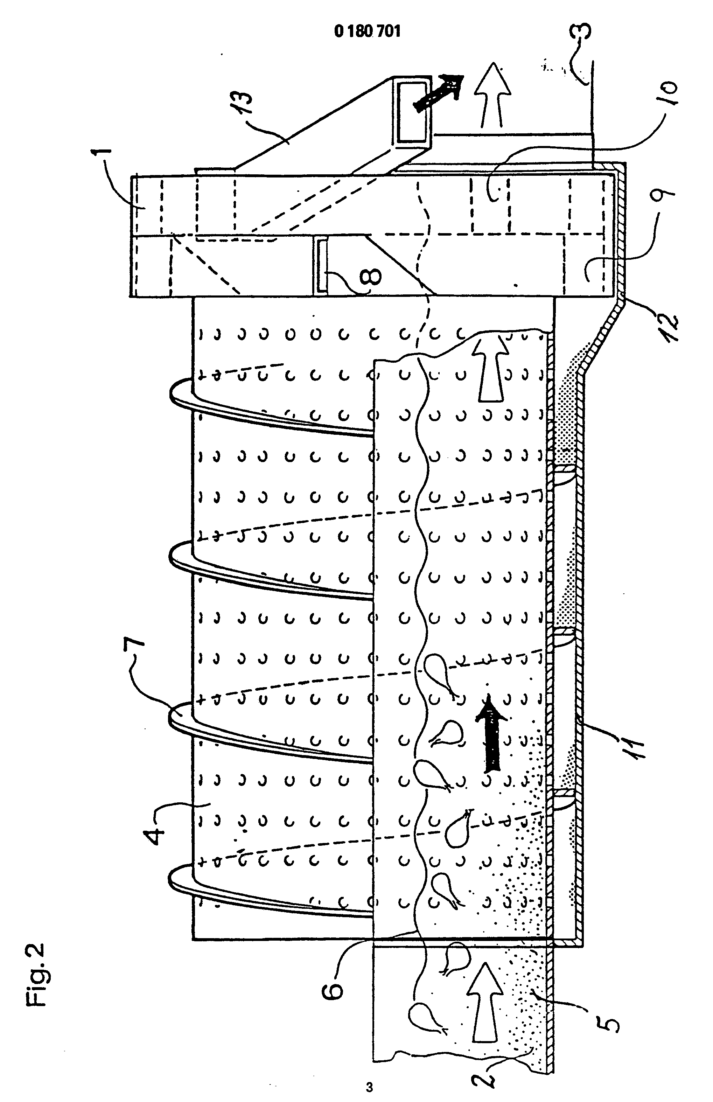

Fig. 2 zeigt einen senkrechten Längsschnitt durch eine erfindungsgemäße Vorrichtung. In der linken Hälfte der Figur ist der erweiterte Abschnitt 5 der einlaufseitigen Hochrinne 2 mit einem Flüssigkeitspegel 6 dargestellt. Die Siebtrommel 4 besteht aus einem gelochten Stahlblech und hat ein einlaufseitig offenes Ende mit einem zentralen Traglager. An der Außenseite der Siebtrommel 4 ist schraubenlinienförmig eine Finne 7 befestigt, die das durch die Siebtrommelöffnungen hindurchgetretene Material zum Hubrad 1 transportiert. Das Hubrad 1 läuft zusammen mit der Siebtrommel 4 in einem Trog 11, der einen schräg verbreiterten Endteil 12 zur Aufnahme des Hubrades 1 aufweist. Der Abstand zwischen der Siebtrommel 4 und dem Trog 11 entspricht in etwa der Höhe der Finne 7, so daß auch Feingut durch die schneckenartige Förderwirkung der Finne 7 zum Hubrad 1 gefördert werden kann. Wie dargestellt endet die Finne 7 am Beginn der schrägen Erweiterung zum verbreiterten Endteil 12 des Troges 11.

Im Hubrad 1 sind in Umfangsrichtung verlaufende Kanäle 9 vorgesehen, in die Wasser durch je eine Öffnung 8 einfließt, wenn diese den Wasserstrom passiert. Durch die Drehung des Hubrades fließt dieses Wasser im jeweiligen Umfangskanal 9 zu Taschen 10 an der Innenseite des Rads und erzeugt in bzw vor diesen Taschen eine nach aufwärts gerichtete Strömung.

Im oberen Teil des Hubrades 1 ist eine Austragsrutsche 13 für die durch Vollpfeile in der Zeichnung markierten Steine und Fremdkörper angeordnet, die von den durch umrandete Pfeile markierten Hackfrüchten und dem Wasser abgeschieden worden sind.

Bei einer in der Zeichnung nicht dargestellten Vorrichtung gemäß der Erfindung hat die Siebtrommel und dementsprechend auch der Trog eine konische Form, wodurch sich ihr wirksamer Strömungsquerschnitt allmählich erweitert und damit die Strömungsgeschwindigkeit entsprechend abnimmt.

Je nach den vom Einzugsgebiet der Zuckerfabriken abhängigen Mengenanteilen von gröberen Steinen, Kies und Feingut können die Löcher in der Siebtrommel 4 eine spezifische Form haben. Wenn große Feingutmengen abgeschieden werden müssen, sind längliche in Umfangsrichtung orientierte Löcher vorteilhaft, durch die entsprechend größere Feingutmengen in den äußeren Förderraum zwischen Siebtrommel und Trog gelangen.

Wenn das Feingut von den Steinen als jeweils verkaufsfähige Produkte getrennt ausgetragen werden soll, kann vor dem Hubrad 1 ein Hilfs-Hubrad angeordnet werden, das mit der Trommel und/oder dem Hubrad fest verbunden ist und die Funktion eines Becherwerkes hat, das das kurz vor dem Austragsende am Trogboden gesammelte Feingut - bevorzugt Sand und feinerer Kies - in eine zweite obere Austragsrutsche übergibt.

Die Taschen 10 können "Schieber" in Form von biegsamen Platten aus armiertem Gummi aufweisen, deren Flexibilität so gewählt ist, daß ein ausreichend dichter Flüssigkeitsabschluß im Normalbetrieb zum Erhalt des notwendigen hydrostatischen Druckes gewährleistet ist, daß jedoch bei Überfüllung und/oder der Aufnahme schwerer Gesteinsbrocken durch selbsttätige Auslenkung oder Ausbiegung der "Schieber" ein Durchgang möglich wird. Aus Gründen der Korrosionsbeständigkeit werden solche Gummiplatten - z. B. Abschnitte von Förderbändern - bevorzugt. Es können jedoch auch federbelastete steife Schwenkklappen mit Scharnieren verwendet werden. Die Schieber sind bevorzugt so angeordnet, daß sie über die Taschen eingeschoben werden können, um diese teilweise zu schließen.

## Patentansprüche

1. Verfahren zum Trennen von Fremdkörpern, wie Steine, Kies und Sand, von Hackfrüchten, insbesondere Zuckerrüben, bei dem die Hackfrüchte zusammen mit den Fremdkörpern in einem Flüssigkeitsstrom transportiert werden, wobei die Strömungsgeschwindigkeit durch Erweiterung des Strömungsquerschnittes derart reduziert wird, daß die verhältnismäßig schweren Fremdkörper absinken und die Hackfrüchte in der Schwebe gehalten werden, und bei dem die abgesunkenen Fremdkörper gesammelt aus dem Flüssigkeitsstrom herausgehoben und seitlich ausgetragen werden,

dadurch gekennzeichnet,

daß die Fremdkörper im Strom durch den erweiterten Strömungsquerschnitt mitgeführt und erst am Ende des erweiterten Strömungsquerschnitts gesammelt und aus dem Flüssigkeitsstrom abgeschieden werden.

2. Vorrichtung zur Durchführung des Verfahrens nach Anspruch 1, bestehend aus einer drehangetriebenen Trommeleinheit und einem damit verbundenen Hubrad, das in der Umfangsrichtung verlaufende Kanäle enthält, die durch die Rotation Transportwasser von der Außenseite an Sammeltaschen für die Steine an der Innenseite des Rads leiten,

dadurch gekennzeichnet,

daß die Trommeleinheit (4) in Strömungsrichtung vor dem Hubrad (1) angeordnet ist.

3. Vorrichtung nach Anspruch 2 mit einer Trommel, die Mantelöffnungen für die Passage von abgesunkenen kleineren Fremdkörpern enthält und an deren Außenseite eine schraubenlinienförmige Finne befestigt ist, die einen zur Austragsseite gerichteten Förderkanal für das Feingut begrenzt,

dadurch gekennzeichnet,

daß die Innenfläche der Trommel (4) eine glatte Zylinderfläche ist.

4. Vorrichtung nach Anspruch 2 oder 3,

dadurch gekennzeichnet,

daß in den Taschen des Hubrads (1) Schieber zum Regulieren des Querschnittes vorgesehen sind, die bei bestimmten Belastungen öffnen.

5. Vorrichtung nach Anspruch 4,

dadurch gekennzeichnet,

daß die Schieber plattenförmige Körper aus armiertem Gummi sind, die eine Linie am Hinterrand der Taschen öffnen.

6. Vorrichtung nach einem der Ansprüche 2 bis 5,

dadurch gekennzeichnet,

daß die Trommel eine konische Form mit austragsseitig breiterem Querschnitt hat.

7. Vorrichtung nach einem der Ansprüche 2 bis 6,

dadurch gekennzeichnet,

daß vor dem Hubrad (1) ein Hilfs-Hubrad zum gesonderten Austrag des Feingutes angeordnet ist.

## Claims

1. A method of separating foreign bodies, such as stones, grit and sand, from root crops, more particularly sugar beet, in which the root crops are conveyed together with the foreign bodies in a current of liquid, the speed of flow being so reduced by widening the flow cross-section that the relatively heavy foreign bodies sink and the root crops are kept in suspension, and in which the sunken foreign bodies are collectively lifted out of the current of liquid and discharged laterally, characterised In that the foreign bodies are entrained in the current through the widened flow cross-section and are not collected and separated from the current of liquid until the end of the widened flow cros-section.

2. Apparatus for performing the method according to claim 1 consisting of a rotary driven drum unit and a lifting wheel connected thereto and containing circumferentially extending ducts which as a result of the rotation guide conveying water from the outside to collecting pockets for the stones on the inside of the wheel, characterised in that the drum unit (4) is disposed in front of the lifting wheel (1) as considered in the direction of flow.

3. Apparatus according to claim 2 comprising a drum having surface apertures for the passage of sunken smaller foreign bodies and having a helical fin which is secured to the outside of the drum and which defines a conveying duct for the fine material, said duct being directed towards the discharge side, characterised in that the inner surface of the drum (4) is a smooth cylindrical surface.

4. Apparatus according to claim 2 or 3, characterised in that slides for regulating the cross-section are provided in the pockets of the lifting wheel (1) and open at specific loadings.

5. Apparatus according to claim 4, characterised in that the slides are reinforced rubber elements lit the form of plates which open a line at the rear edge of the pockets.

6. Apparatus according to any one of claims 2 to 5, characterised in that the drum has a conical shape with a wider cross-section on the discharge side.

7. Apparatus according to any one of claims 2 to 6, characterised in that an auxiliary lifting wheel for separate discharge of the fine material is disposed in front of the lifting wheel (1).

## Revendications

1. Procédé pour séparer des corps étrangers, tels que des pierres, du gravier et du sable, d'avec des plantes sarclées, en particulier des betteraves à sucre, dans lequel les plantes sarclées sont transportées, en même temps que les corps étrangers, dans un courant liquide, étant précisé que, du fait de l'élargissement de la section de l'écoulement, la vitesse de l'écoulement est réduite de façon telle que les corps étrangers, relativement lourds, s'enfoncent et que les plantes sarclées sont maintenues en suspension, et dans lequel les corps étrangers qui se sont enfoncés sont recueillis à part du courant liquide, relevés et évacués latéralement, caractérisé en ce que les corps étrangers sont entraînés dans le courant à travers la section élargie de l'écoulement et ne sont recueillis, et séparés d'avec le courant liquide, qu'à l'extrémité de la section élargie de l'écoulement.

2. Dispositif pour l'exécution du procédé selon la revendication 1, constitué d'un tambour entraîné en rotation et d'une roue élévatrice qui lui est reliée et qui contient des canaux qui sont dirigés dans la direction périphérique et qui, du fait de la rotation, conduisent l'eau de transport, depuis la face extérieure de la roue, vers des poches de collectes pour les pierres, prévues sur la face intérieure de la roue, caractérisé en ce que le tambour (4) est disposé en aval de la roue élévatrice (1), dans le sens de l'écoulement.

3. Dispositif selon la revendication 2, comportant un tambour qui contient, à la périphérie, des ouvertures pour le passage des corps étrangers assez petits qui s'enfoncent et sur la face extérieure duquel est fixé un filet de forme hélicoïdale qui limite un canal de transport, dirigé du côté de l'évacuation, pour les fines, caractérisé en ce que la surface intérieure du tambour (4) est une surface cylindrique lisse.

4. Dispositif selon la revendication 2 ou la revendication 3, caractérisé en ce que dans les poches de la roue élévatrice (1) sont prévues, pour réguler la section, des vannes qui s'ouvrent en présence de contraintes déterminées.

5. Dispositif selon la revendication 4, caractérisé en ce que les vannes sont des corps en caoutchouc armé et en forme de plaques qui ouvrent une ligne sur le bord arrière des poches.

6. Dispositif selon l'une des revendications 2 à 5, caractérisé en ce que le tambour a une forme conique avec une section qui s'élargit côté évacuation.

7. Dispositif selon l'une des revendications 2 à 6, caractérisé en ce qu'en aval de la roue élévatrice (1) est disposée une roue élévatrice auxiliaire pour l'évacuation particulière des fines.

Fig. 1

0 180 701

Fig.2